# FASCICULE DE BREVET EUROPEEN

(11) **EP 1 987 932 B1**
(45) Date de publication et mention de la délivrance du brevet: **19.01.2011**
(21) Numéro de dépôt: 08154332.4
(22) Date de dépôt: 10.04.2008
(51) Int. Cl.: B29C 33/42, B29D 30/06, B29C 33/38

(54) **Procédé de fabrication de moules pour pneumatique cloute**
Herstellungsverfahren von Formen für Spikereifen
Method for manufacturing moulds for a studded tyre

(30) Priorité: 23.04.2007 FR 0702975
(43) Date de publication de la demande: 05.11.2008
(73) Titulaire: Société de Technologie MICHELIN, 63000 Clermont-Ferrand (FR); Michelin Recherche et Technique S.A., 1763 Granges-Paccot (CH)
(72) Inventeur: Guichon, Cyril, Greer, 29650 (US); Cocural, Jean-Louis, 63530 Enval (FR); Martin, Bruno, 63460 Combronde (FR); Rieu, Jean-Luc, 63000 Clermont-Ferrand (FR)
(74) Mandataire: Reynaud, Georges

(56) Documents cités:
- GB-A- 1 075 312
- JP-A- 62 094 402
- US-A- 3 327 570
- US-A- 4 471 200
- US-A- 4 553 918
- US-A- 4 691 431

## Description

L'invention concerne le domaine de la fabrication des pneumatiques pour les véhicules terrestres et plus particulièrement la fabrication des pneumatiques destinés à rouler sur des sols glacés.

La réglementation applicable dans certains pays nordique autorise l'utilisation de pneumatiques comportant des clous de manière à améliorer l'adhérence des pneumatiques sur les sols gelés et particulièrement glissants. Ces clous sont disposés dans des logements pratiqués sur les pains situés sur la bande de roulement.

Les pains de gomme formant la bande de roulement de ces pneumatiques comportent aussi, en règle générale, de nombreuses incisions transversales, afin d'augmenter l'adhérence du pneumatique sur sol enneigé.

La fabrication de ces pneumatiques particuliers comprend une première étape aboutissant à la réalisation d'un pneumatique vulcanisé dont les pains comportent des incisions et des logements destinés à recevoir les clous, et une seconde étape au cours de laquelle un procédé adapté permet de disposer les clous dans lesdits logements.

De manière à ne pas dégrader la tenue de la tête des clous dans leurs logements, les incisions sont interrompues à l'intérieur d'une zone, généralement circulaire, comprise autour du logement destiné à recevoir le clou.

A cet effet, le moule destiné à la réalisation de ces pneumatiques adaptés aux conditions hivernales sévères comporte des lamelles destinées à former les incisions, et des goupilles destinées à former les logements aptes à recevoir lesdits clous.

Les lamelles sont constituées par des éléments ayant la forme d'une cloison mince et rigide, généralement métallique, dont la hauteur correspond à la profondeur de l'incision, et dont la longueur correspond à la longueur de l'incision. Ces lamelles peuvent avoir une forme ondulée, rectiligne, voire plus complexe selon le type d'usage que l'on recherche. Les lamelles sont disposées en saillie dans la partie du moule destinée à donner sa forme définitive à la bande de roulement, et qui forme la garniture G du moule.

Les goupilles ont la forme générale de la partie du clou qui est insérée dans le logement, et sont implantées sur le pain de gomme à un endroit prédéterminé en fonction des critères d'adhérence et de bruit définis par le concepteur du pneumatique.

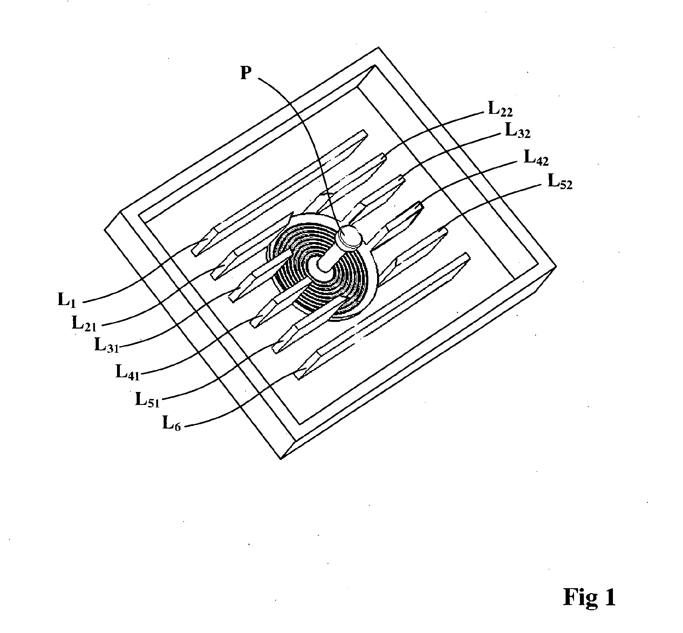

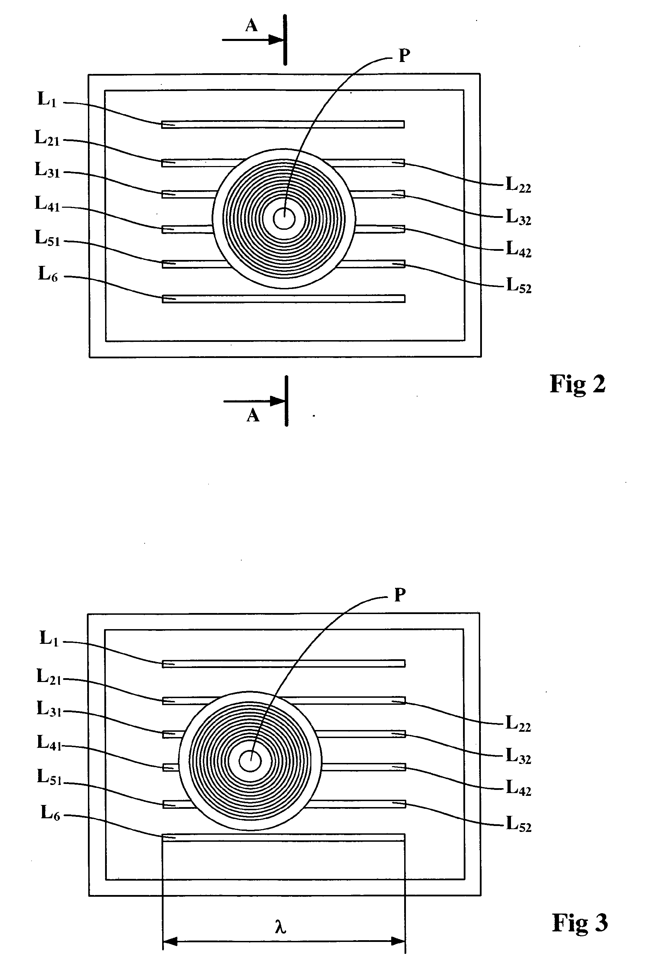

En regardant de plus près la forme de la matrice d'un pain de sculpture, comme cela est illustré aux figures 1 et 2, on peut observer que les lamelles sont interrompues autour de la zone située à une distance donnée du centre de la goupille. Les lamelles L₁ et L₆ occupent toute la largeur du pain de sculpture. En revanche les lamelles de rang 2, 3, 4 et 5 sont formées de deux lamelles alignées et placées de part et d'autre d'un cercle entourant la base de la goupille P. La lamelle de rang 2 se décompose en L₂₁ et L₂₂, la lamelle de rang 3 se décompose en L₃₁ et L₃₂, la lamelle de rang 4 se décompose en L₄₁ et L₄₂ et la lamelle de rang 5 se décompose en L₅₁ et L₅₂. De plus, on observe que les lamelles L₂₁, L₂₂, L₃₁, L₃₂, L₄₁, L₄₂; L₅₁ et L₅₂.ont des longueurs différentes en fonction de la place qu'elles occupent autour de l'espace formé par le cercle entourant la goupille P comme cela est montré à la figure 2, qui est une vue de dessus de l'élément de garniture G montré à la figure 1.

Il s'en suit que la fabrication d'une garniture de ce type nécessite la réalisation d'un grand nombre de lamelles différentes dont la longueur est adaptée aux places que les goupilles occupent sur l'élément de sculpture.

On remarquera aussi que la goupille peut également se situer à des endroits très variables sur le pain de sculpture comme cela est montré sur la figure 3. On constate, sur la base de cet exemple, que l'élément de lamelle L₃₁ de la figure 3 est beaucoup plus court que l'élément de lamelle L₃₁ illustré à la figure 2. Cela augmente d'autant la variété des lamelles qu'il est nécessaire de réaliser et d'implanter dans la garniture du moule.

Enfin la détermination de la place définitive de la goupille sur le pain de gomme peut se faire à un stade tardif du développement du pneumatique en raison des nombreuses boucles d'optimisation nécessaires à la recherche du meilleur compromis adhérence/bruit.

Il résulte de tout ce qui précède que ce mode de réalisation pénalise gravement le coût de revient d'une telle garniture.

L'invention a pour objet de réduire la complexité de fabrication des garnitures comprenant des lamelles destinées à mouler les incisions pratiquées dans le pain de gomme, et des goupilles destinées à mouler le logement de réception des clous.

La publication US 3 327 570 décrit un procédé de perçage d'une garniture de moule. Toutefois, la mise en oeuvre de ce procédé nécessite d'enlever préalablement les lamelles dans la zone où l'on désire réaliser le perçage pour s'affranchir du problème lié au perçage simultané de la garniture et des lamelles. En effet les lamelles se présentent sons la forme de lames de métal de faible épaisseur qu'il est difficile de percer dans une direction parallèle au plan de la lames en rtaison des vibrations de la lame de métal et des déformations de la lames sous l'action de la mèche de perçage.L'invention a pour objet d'apporter une solution à ce problème de perçage des lamelles.

Selon l'invention, le procédé de réalisation d'une garniture de moule destinée à la fabrication de pneumatique comportant des pains de sculpture sur lesquels sont pratiquées des incisions et supportant en règle générale des clous, comprend, selon la revendication 1, une première étape au cours de laquelle on réalise de manière traditionnelle une garniture de moule en disposant des lamelles de longueur et de forme sensiblement équivalentes sur les parties de la garniture destinées à mouler lesdits pains de gomme.

La réalisation de cette première est suivie d'une seconde étape au cours de laquelle :,
- on dégage radialement par perçage la matière de la garniture et des lamelles comprise dans un espace cylindrique situé au niveau de chacun des emplacements destinés à recevoir des goupilles aptes à mouler les logements desdits clous,
- avant d'effectuer le perçage, on coule entre les lamelles placées du coté intérieur de la garniture, et à l'endroit où on désire réaliser le perçage, un matériau thermofusible (T), que l'on fait fondre après avoir effectué ladite opération de perçage,
- et on dispose un insert dans l'orifice obtenu préalablement.

Des formes avantageuses de l'invention font l'objet des revendications dépendantes.

En maintenant fermement les lamelles enserrées dans une matière rigide on élimine le problème lié au perçage des lamelles.

De façon avantageuse on peut réaliser le perçage en procédant depuis l'extérieur de la garniture vers l'intérieur de la garniture ce qui permet d'améliorer la précision et la qualité du perçage.

En règle générale, l'insert comporte une goupille destinée à mouler le logement apte à recevoir ledit clou, bien que le procédé selon l'invention ne soit pas limité à la fabrication de ce seul type de moule et puisse être étendu à la fabrication de tout type de moule comportant un insert.

De cette manière, il n'est plus nécessaire de déterminer à l'avance la longueur des lamelles en fonction de l'emplacement de la goupille, dés lors que la matière des lamelles situées au droit de la zone de diamètre donné et entourant la goupille, est enlevée au cours de la même opération au cours de laquelle on perce la garniture de manière à dégager l'espace destiné à recevoir l'insert supportant la goupille.

Il est alors possible de réaliser des lamelles de longueurs sensiblement équivalentes et de diminuer ainsi considérablement le nombre de lamelles de longueur différentes à réaliser et à implanter puisque, en reprenant l'exemple des paragraphes précédents illustré par les figures 1 et 2, les lamelles de rang 2, 3, 4 et 5 ont sensiblement la même longueur que les lamelles de rang 1 et 6, contrairement au procédé de l'art antérieur dans lequel il était nécessaire de réaliser et d'implanter deux fois plus de lamelles, respectivement les lamelles L₂₁, L₂₂, L₃₁, L₃₂, L₄₁, L₄₂; L₅₁ et L₅₂.

La description qui suit a pour objet de mettre en évidence un mode préférentiel et particulièrement économique de réalisation de l'invention en s'appuyant sur les figures 1 à 9 dans lesquelles :
- La figure 1 représente une vue schématique d'une partie de garniture comprenant des lamelles et une goupille, et destinée à mouler un pain de gomme comportant des incisions et un clou.
- la figure 2 représente une vue de dessus de la partie de garniture illustrée à la figure 1,
- la figure 3 représente la vue de dessus de la même partie de garniture dans laquelle l'emplacement de la goupille a été modifié,
- la figure 4 représente une vue schématique d'une partie de garniture comprenant des lamelles de longueur sensiblement égales,
- la figure 5 représente une vue schématique de face, selon une coupe BB, de la partie de garniture illustrée à la figure 4,
- la figure 6 représente la vue schématique de face, en coupe selon BB, de la garniture dans laquelle une matière thermodurcissable a été coulée,
- la figure 7 représente la vue schématique de face, en coupe selon BB, de l'étape de perçage de la garniture,
- la figure 8 représente la vue schématique de face, en coupe selon BB, de la partie de garniture après perçage,
- la figure 9 représente la partie de garniture dans laquelle a été disposé un insert supportant une goupille.

Le résultat final à atteindre selon le procédé de l'invention reste identique à celui qui est illustré à la figure 1, à savoir une garniture comportant des lamelles et une goupille.

Pour obtenir ce résultat, on procède selon les étapes suivantes.

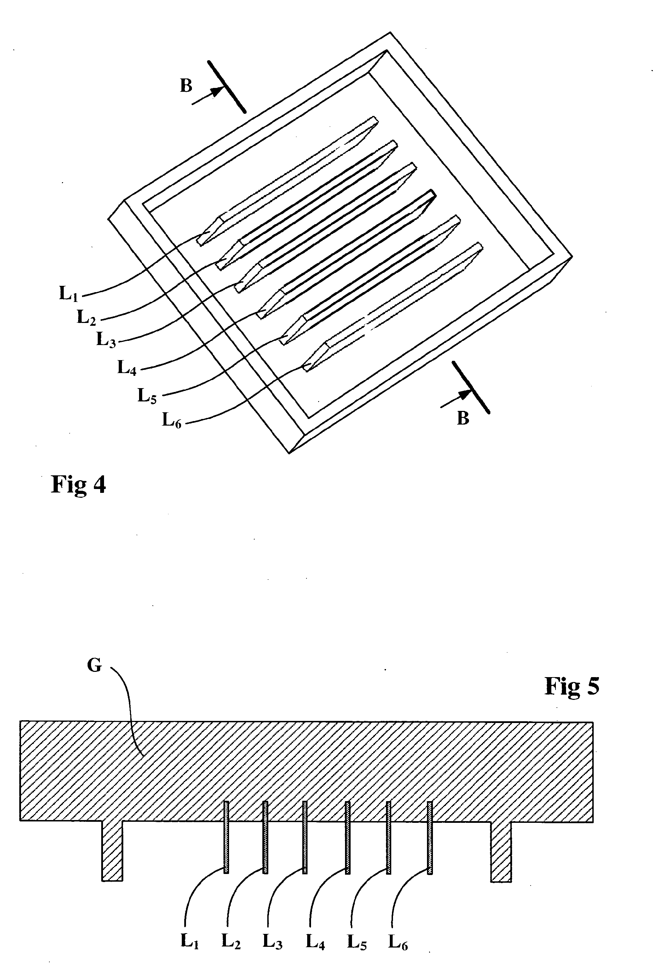

On réalise une garniture G, dont une partie, correspondant à un pain de gomme, est illustrée à la figure 4. On remarquera que les lamelles L₁, L₂, L₃, L₄, L₅, L₆ ont sensiblement la même longueur λ, et que la réalisation de cet élément de garniture se fait sans tenir compte de la position finale de la goupille. Cela revient à réaliser une garniture G de même nature que les garnitures de moules destinées à fabriquer des pneumatiques dits à lamelles, et ne comprenant pas de clous.

La figure 5, illustre une vue en coupe selon une direction BB de l'élément de garniture représenté à la figure 4. Les lamelles L₁, L₂, L₃, L₄, L₅ et L₆ sont implantées dans la garniture G, et le pied de chaque lamelle pénètre profondément dans le corps de la garniture G. La garniture G est obtenue de façon classique par usinage ou, préférentiellement, par fonderie. Dans ce dernier cas, le matériau qui forme la garniture est une composition à base d'aluminium. Les lamelles sont réalisées en règle générale dans un matériau à base d'acier, dont la dureté est très supérieure au matériau qui compose la garniture.

Selon l'exemple de mise en oeuvre de l'invention faisant l'objet de la présente description, on choisit d'effectuer le dégagement de la matière située au droit de la goupille par perçage à l'aide d'un foret F ou de manière équivalente par fraisage.

Il va de soi que les principes généraux de l'invention s'appliquent également lorsque l'on réalise le perçage à l'aide d'autres moyens tels que des moyens d'enlèvement de matière par électroérosion, ou par projection d'un faisceau laser, ou d'autres moyens équivalents.

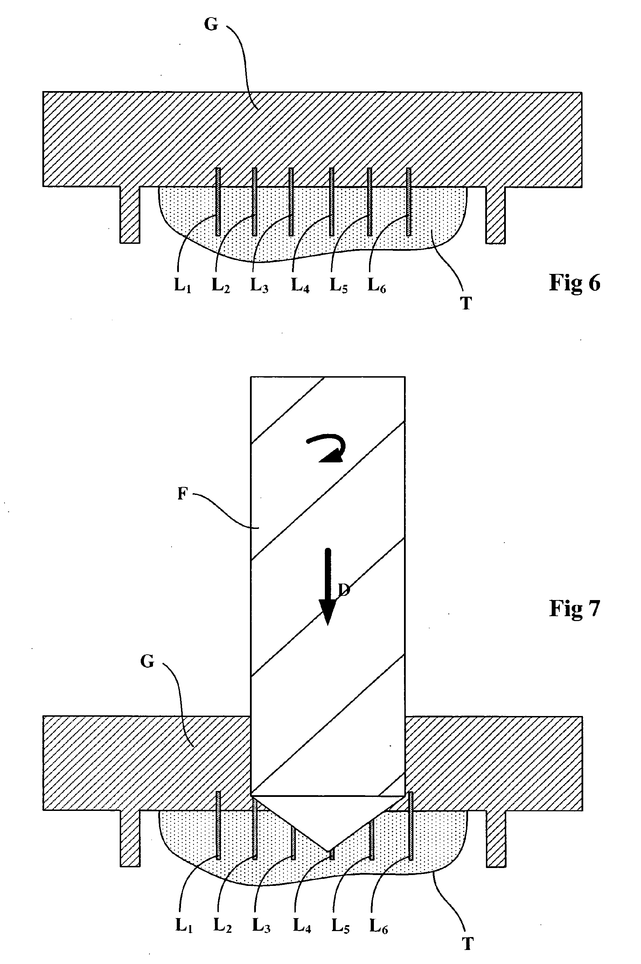

Selon l'invention, et pour éviter que les lamelles, qui ont la forme de cloisons de faible épaisseur, ne se déforment sous l'action du foret et des vibrations, on coule une matière thermo fusible T dans l'espace libre situé entre les lamelles placées du coté intérieur de la garniture G, et à l'endroit où on désire effectuer le forage de la garniture G, comme cela est illustré à la figure 6. Les matériaux thermo fusibles convenant à l'usage décrit ci-dessus sont connus dans le commerce sous le nom commercial de Cerrocast®, qui sont des alliages fusibles à bas point de fusion à base d'étain et de bismuth.

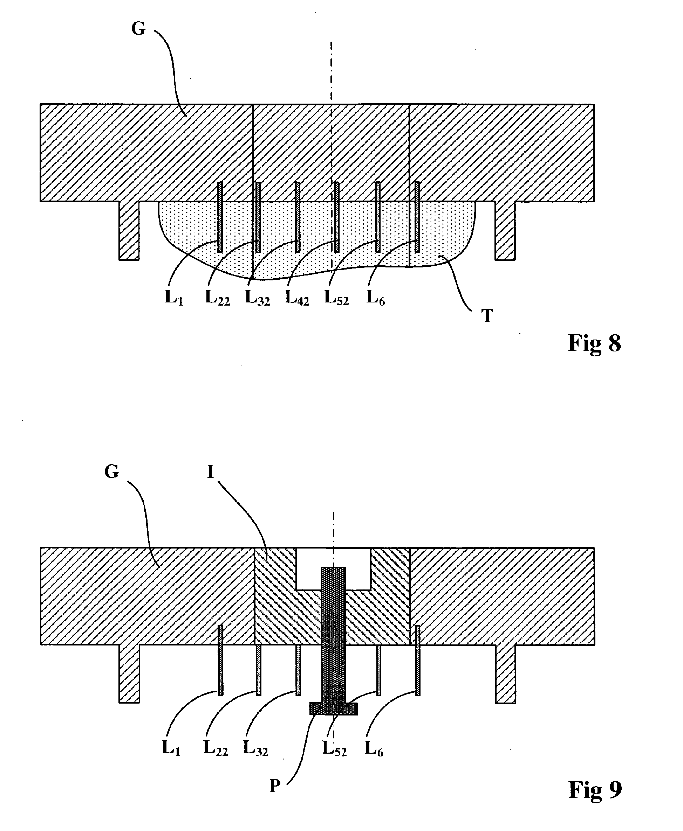

Une fois cette opération réalisée, et après avoir attendu que le matériau thermo fusible ait atteint sa dureté maximale, on réalise le perçage de la garniture G en déplaçant dans la direction radiale un foret F de type monobloc d'un diamètre déterminé, depuis l'extérieur de la garniture G vers l'intérieur de la garniture, comme cela est indiqué par la flèche D de la figure 7. Le foret permet de dégager la matière de la garniture, du matériau thermo fusible et des lamelles comprise dans un espace cylindrique. Comme cela est représenté à la figure 8.

Les éléments de lamelle situés sur le parcours du foret ont été éliminés, et les lamelles de rang 2, 3, 4 et 5 sont fractionnées en deux parties de sorte que les lamelles L₂₂, L₃₂, L₄₂ et L₅₂ sont désormais visibles sur la représentation schématique en coupe de la figure 8.

Il convient alors de retirer le matériau thermo fusible T en apportant la quantité de chaleur suffisante pour faire fondre le reste de matériau présent sur la garniture G.

L'étape finale, illustrée à la figure 9, consiste à disposer un insert I dans l'orifice dégagé par le foret à l'étape précédente. Le diamètre du foret détermine le diamètre de l'insert I que l'on cherche à introduire. La fixation de l'insert dans la garniture G se fait de manière préférentielle par vissage du corps de l'insert dans un filetage adapté et réalisé préalablement dans la garniture.

On observera que cette vue en coupe selon la figure 9 représente la vue en coupe de la figure 2 selon AA.

L'insert supporte une goupille P. Ladite goupille peut être fixée à l'insert par vissage, par emboutissage ou par tout autre moyen équivalent permettant d'assurer une liaison solide entre la goupille et l'insert.

On appréciera que le fait de rendre l'insert amovible permet, de faciliter les opérations de maintenance de la garniture de moule, en particulier, lorsque l'on désire remplacer la goupille en raison de l'usure qu'elle présente ou lorsque, pour une cause quelconque, la goupille viendrait à se rompre.

Il est également possible de réaliser des motifs de marquage sur la surface de l'insert dans le but de satisfaire des besoins spécifiques de nature esthétique (comme cela est illustré sur les figures 1 à 3) ou technique comme par exemple l'indication des références du clou à utiliser.

## Revendications

1. Procédé de réalisation d'une garniture de moule (G) destinée à la fabrication de pneumatique comportant des pains de sculpture comprenant des incisions dans lequel :
- on réalise une garniture de moule en disposant des lamelles de longueur λ et de forme sensiblement équivalentes (L₁, L₂, L₃, L₄, L₅, L₆) sur les parties de la garniture destinées à mouler lesdits pains de gomme,
- on dégage radialement par perçage la matière de la garniture (G) et des lamelles (L₁, L₂, L₃, L₄, L₅, L₆) comprise dans un espace cylindrique situé au niveau de chacun des emplacements destinés à recevoir des goupilles (P) aptes à mouler les logements desdits clous,
- et on dispose un insert (I) dans l'orifice obtenu préalablement.
**caractérisé en ce que**, avant d'effectuer le perçage, on coule entre les lamelles placées du coté intérieur de la garniture et à l'endroit où on désire réaliser le perçage un matériau thermo fusible (T), que l'on fait fondre après avoir effectué ladite opération de perçage.

2. Procédé selon la revendication 1 dans lequel on réalise l'orifice par perçage en procédant depuis l'extérieur de la garniture (G) vers l'intérieur de la garniture.

3. Procédé selon la revendication 1 ou 2 dans lequel l'insert (I) supporte une goupille (P) destinée à mouler le logement apte à recevoir un clou.

4. Procédé selon l'une des revendications 1 à 3 dans lequel on utilise un insert (I) amovible.

5. Procédé selon l'une des revendications 1 à 4 dans lequel on réalise des motifs de marquage sur la surface de l'insert (I) placée radialement du coté de l'intérieur de la garniture (G).

## Claims

1. Method for producing a mould liner (G) intended for the manufacture of tyres comprising tread blocks that have incisions in them, in which:
- a mould liner is produced by positioning lamella (L₁, L₂, L₃, L₄, L₅, L₆) of substantially equivalent shape and length λ on the parts of the liner that are intended to mould the said rubber blocks,
- the material of the liner (G) and of the lamella (L₁, L₂, L₃, L₄, L₅, L₆) contained in a cylindrical space located at each of the sites intended to accept pins (P) capable of moulding the housings for the said studs is removed radially by drilling,
- and an insert (I) is positioned in the hole obtained beforehand,
**characterized in that**, before drilling is performed, a thermoset (T) that will be melted after the said drilling operation has been performed, is poured between the lamella positioned on the interior side of the liner and at the point where the drilling is to be made.

2. Method according to Claim 1, in which the hole is made by drilling from the outside of the liner towards the inside of the liner.

3. Method according to Claim 1 or 2, in which the insert (I) supports a pin (P) intended to mould the housing capable of accepting a stud.

4. Method according to one of Claims 1 to 3, in which use is made of a removable insert (I).

5. Method according to one of Claims 1 to 4, in which patterns are marked on that surface of the insert (I) that is positioned radially on the interior side of the liner.

## Patentansprüche

1. Verfahren für die Herstellung einer Gießformeinlage (G), die für die Herstellung von Luftreifen bestimmt ist, die Profilblöcke aufweisen, die Einschnitte enthalten, bei dem:
- eine Gießformeinlage durch Anordnen von Lamellen mit Länge λ und mit einer im Wesentlichen äquivalenten Form (L₁, L₂, L₃, L₄, L₅, L₆) auf den Teilen der Einlage, die dazu bestimmt sind, die Gummiblöcke zu gießen, verwirklicht wird,
- das Material der Einlage (G) und der Lamellen (L₁, L₂, L₃, L₄, L₅, L₆), das in einem zylindrischen Raum vorhanden ist, der sich am Ort jeder der Stellen befindet, die dazu vorgesehen sind, Zapfen (P) aufzunehmen, die dazu ausgelegt sind, Aufnahmesitze der Nägel zu gießen, durch Einstechen radial abgelöst wird,
- ein Einsatz (I) in der zuvor erhaltenen Öffnung angeordnet wird,
**dadurch gekennzeichnet, dass** vor dem Ausführen des Einstechens zwischen die Lamellen, die auf der Innenseite der Einlage angeordnet sind, und an dem Ort, an dem das Einstechen ausgeführt werden soll, ein wärmeschmelzbares Material (T) gegossen wird, das geschmolzen wird, nachdem der Einstechvorgang ausgeführt worden ist.

2. Verfahren nach Anspruch 1, wobei die Öffnung durch Einstechen **dadurch** verwirklicht wird, dass von der Außenseite der Einlage (G) zur Innenseite der Einlage vorgegangen wird.

3. Verfahren nach Anspruch 1 oder 2, wobei der Einsatz (I) einen Zapfen (P) trägt, der dazu bestimmt ist, den Aufnahmesitz zu gießen, der einen Nagel aufnehmen kann.

4. Verfahren nach einem der Ansprüche 1 bis 3, wobei ein entnehmbarer Einsatz (I) verwendet wird.

5. Verfahren nach einem der Ansprüche 1 bis 4, wobei auf der Oberfläche des Einsatzes (I), die radial auf der Innenseite der Einlage (G) angeordnet ist, Markierungsmuster verwirklicht werden.
